# EUROPÄISCHE PATENTSCHRIFT

(11) **EP 0 745 757 B1**
(45) Veröffentlichungstag und Bekanntmachung des Hinweises auf die Patenterteilung: **25.02.1998**
(21) Anmeldenummer: 96107557.9
(22) Anmeldetag: 11.05.1996
(51) Int. Cl.: F01L 1/047, F16H 53/02, F16D 1/08

(54) **Zusammengesetzte Nockenwelle, insbesondere für Brennkraftmaschinen**
Assembled camshaft, particularly for internal combustion engines
Arbre à cames rapportées, en particulier pour moteurs à combustion interne

(30) Priorität: 02.06.1995 DE 19520306
(43) Veröffentlichungstag der Anmeldung: 04.12.1996
(73) Patentinhaber: Ford-Werke Aktiengesellschaft, 50735 Köln (DE); FORD MOTOR COMPANY LIMITED, Brentwood, Essex CM13 3BW (GB); FORD FRANCE S. A., 92506 Rueil-Malmaison (FR)
(72) Erfinder: Meurer, Josef, 53844 Troisdorf (DE); Lenerz, Edmund, Hatfield Peverel, Essex CM3 2NT (GB); Metz, Hans-Walter, 50259 Pulheim (DE); Weber, Gottfried, 50672 Köln (DE)
(74) Vertreter: Messulam, Alec Moses

(56) Entgegenhaltungen:
- EP-A- 0 234 398
- US-A- 2 931 412
- US-A- 3 438 660
- PATENT ABSTRACTS OF JAPAN vol. 011, no. 348 (M-642), 14.November 1987 & JP-A-62 130725 (RIKEN CORP), 13.Juni 1987,
- PATENT ABSTRACTS OF JAPAN vol. 012, no. 018 (M-660), 20.Januar 1988 & JP-A-62 177357 (RIKEN CORP), 4.August 1987,

## Beschreibung

Die Erfindung bezieht sich auf eine zusammengesetzte Nockenwelle, insbesondere für Brennkraftmaschinen, der im Oberbegriff des Patentanspruches 1 erläuterten Art.

Aus der DE-OS 31 28 522 ist bereits eine Steuerwelle für Verbrennungsmotoren bekannt, bei der auf einem Wellenteil eine Vielzahl von Nockenteilen unter Zwischenschaltung jeweils einer kegelförmigen Spannhülse fest angeordnet werden.

Bei der bekannten Steuerwelle für einen Verbrennungsmotor handelt es sich um eine Steuerwelle für eine Einspritzpumpe auf der Brennstoffnocken in einer bestimmten winkelmäßig einstellbaren Anordnung festgelegt werden müssen. Dementsprechend ist der Aufnahmebereich der Nockenteile und auch die Innenbohrung der Nockenteile vollkommen kreisrund ausgebildet, um jede gewünschte Winkellage mittels der konischen Spannhülse realisieren zu können.

Für eine Nockenwelle für Brennkraftmaschinen ist eine solche nicht formschlüssige Verbindung zwischen dem Wellenteil und den Nockenteilen nicht ausreichend drehkraftschlüssig und montagetechnisch nur äußerst schwierig zu realisieren.

Aus der DE-OS 33 21 846 ist eine zusammengesetzte Nockenwelle für Brennkraftmaschinen bekannt, bei der auf einem Wellenteil eine Vielzahl von sich längs erstreckenden Vorsprüngen oder Nuten angeordnet sind und die Nockenteile sind an ihren Innenbohrungen mit entsprechenden Nuten oder Vorsprüngen versehen, die auf die entsprechenden Vorsprünge am Wellenteil aufreiten bzw. in die entsprechenden Nuten am Wellenteil einragen und so eine formschlüssige Verbindung zwischen dem Wellenteil und den Nockenteilen bereitstellen.

Die Anzahl der Vorsprünge oder Nuten entspricht hierbei der Anzahl der Motorzylinder oder einer Teilanzahl davon.

Die Befestigung der Nockenteile am Wellenteil kann hierbei entweder durch eine Preßbefestigung erfolgen oder nachfolgend der formschlüssigen Zuordnung kann noch eine Lötoperation zum Festlegen der Nockenteile durchgeführt werden.

Die bekannte zusammengesetzte Nockenwelle weist den Nachteil auf, daß im Falle einer Preßbefestigung durch das axiale Aufschieben der Nockenteile auf den Wellenteil einerseits unter Umständen Späne anfallen und andererseits erhöhte Spannungen in den Nockenteilen auftreten können. Durch die Nuten oder Vorsprünge ist eine unmittelbare Lagerung der Nockenwelle an ihrem Außenumfang nicht möglich und so muß die Lagerung über aufgesetzte Lagerbuchsen erfolgen, die zu größeren Lagerdurchmessern führen, wodurch die Reibungsverluste ansteigen.

Aus der JP-A-62 130 725 (D1) ist eine zusammengesetzte Nokkenwelle bekannt, bei der ein rohrförmiges Wellenteil mit einer Vielzahl von Nockenteilen unter Zwischenschaltung jeweils einer Ausgleichshülse fest verbunden wird. Das Wellenteil, die Innenbohrung der Nockenteile und die Ausgleichshülsen weisen hierbei einen wellenförmigen Verzahnungsquerschnitt auf, die übereinstimmend miteinander ausgebildet sind.

Die bekannte zusammengesetzte Nockenwelle weist den Nachteil auf, daß zu einer drehfesten Verbindung des Wellenteiles mit der Vielzahl von Nockenteilen das rohrförmige Wellenteil durch Druckaufweitung verformt werden muß. Ein solcher Verfahrensschritt erfordert verhältnismäßig aufwendige und teure Vorrichtungen.

Aus der EP-A-234 398 (D2) ist eine zusammengesetzte Nockenwelle bekannt, bei denen auf einem Wellenteil eine Vielzahl von Nockenteilen unter Zwischenschaltung jeweils einer, eine federelastische Klemmbefestigung gewährleistenden Spannhülse angeordnet sind.

Obwohl hier das Wellenteil auch rohrförmig ausgebildet ist, ist ein Druckaufweiten nicht vorgesehen. Die federelastische Klemmbefestigung wird jedoch, abgesehen von der aufgebrachten Haftreibung zwischen den zylindrischen Oberflächen an dem Wellenteil und den Innenumfängen der Nockenteile nur über einen radialen Mitnehmervorsprung am Innenumfang der Nockenteile zusätzlich abgesichert.

Die bekannte zusammengesetzte Nockenwelle weist damit den Nachteil auf, daß bei Toleranzerhöhungen im Bereich der miteinander zu verbindenden zylindrischen Oberflächen am Wellenteil und an den Nockenteilen die drehfeste Verbindung zwischen dem Wellenteil und den Nockenteilen gefährdet werden kann.

Die Aufgabe der Erfindung ist es, eine zusammengesetzte Nockenwelle, insbesondere für Brennkraftmaschinen der im Oberbegriff des Patentanspruches 1 erläuterten Art derart zu verbessern, daß ein einfacher Formschluß zwischen dem Wellenteil und den Nockenteilen bereitgestellt wird und durch eine federnde Spannhülse eine einfache Montage der Nockenteile auf dem Wellenteil ermöglicht wird, wobei die jeweils erforderliche Winkellage eines jeden einzelnen Nockenteiles gegenüber dem Wellenteil in einfacher Weise erreicht werden kann. Der Rohraußendurchmesser wird vorzugsweise unmittelbar als Lagerdurchmesser herangezogen, wodurch das Aufbringen von getrennten Lagerbuchsen vermieden wird.

Gemäß der Erfindung wird diese Aufgabe gelöst, indem an einer zusammengesetzten Nockenwelle, insbesondere für Brennkraftmaschinen, der im Oberbegriff des Patentanspruches 1 erläuterten Art, die im Kennzeichenteil des Patentanspruches 1 aufgezeigten Merkmale angewendet werden.

Dadurch, daß das Wellenteil vorzugsweise als ein Fertigteil mit einer in den Bauteil- und Nocken-Aufnahmebereichen aufgebrachten wellenförmigen Außenverzahnung, die Nockenteile als vorzugsweise in Fertigteilqualität hergestellte Sinterteile mit einer an ihren Innenbohrungen ausgebildeten Innenverzahnung, und Spannhülsen als mit den entsprechenden Außen- und Innenverzahnungen zusammenwirkende, ein wellenförmiges Profil aufweisende, geschlitzte oder zweigeteilte Spannhülsen ausgebildet sind, wird einerseits eine einfache flexible Montage ermöglicht und über die elastische Spannhülse noch eine erwünschte Dämpfung der im Ventiltrieb einer Brennkraftmaschine auftretenden Stöße bewirkt.

In den Unteransprüchen sind noch verschiedene zweckmäßige Ausführungsformen der Erfindung näher erläutert.

Die Erfindung wird anhand mehrerer in den beigefügten Zeichnungen gezeigter Ausführungsbeispiele erläutert. Es zeigt:
- Fig. 1: eine Ansicht einer zusammengesetzten Nockenwelle, gemäß der Erfindung, insbesondere für Brennkraftmaschinen, mit im Schnitt gezeigten Nockenteilen;
- Fig. 2: einen vergrößerten Teilschnitt entlang der Linie II-II in Fig. 1 durch eine Nockenteilbefestigung gemäß der Erfindung;
- Fig. 3: einen Teilschnitt durch die Nockenteilbefestigung gemäß Variante 1 in Fig. 1;
- Fig. 4: einen Teilschnitt durch die Nockenteilbefestigung gemäß Variante 2 in Fig. 1;
- Fig. 5: einen Teilschnitt durch die Nockenteilbefestigung gemäß Variante 3 in Fig. 1;
- Fig. 6: einen Teilschnitt durch die Nockenteilbefestigung gemäß Variante 4 mit einer zusätzlichen axialen Festlegungsmöglichkeit

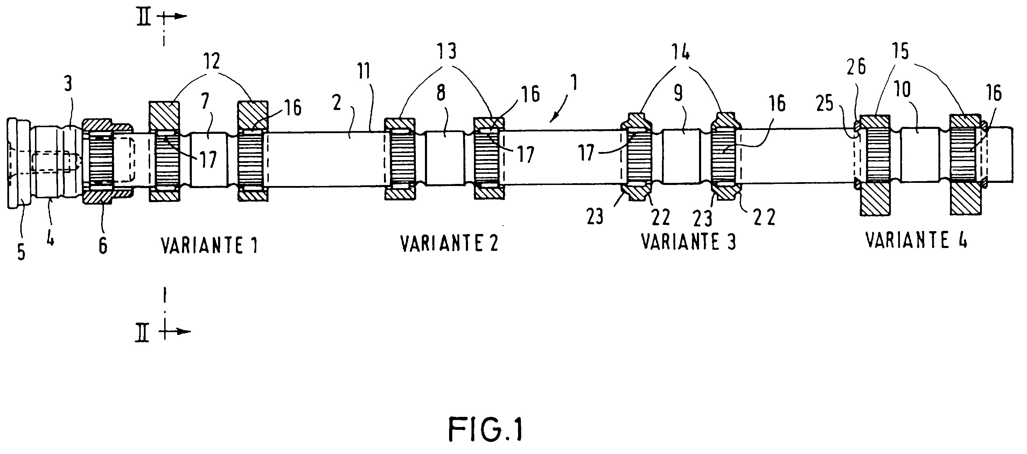

In Fig. 1 ist eine zusammengesetzte Nockenwelle 1 für eine Brennkraftmaschine in Seitenansicht gezeigt, wobei die Nokkenteile geschnitten gezeigt sind. Die Nockenwelle 1 kann hierbei entweder aus Voll- oder aus Rohrmaterial hergestellt sein. Im vorliegenden Ausführungsbeispiel ist die Nockenwelle 1 aus einem rohrförmigen Wellenteil 2 gebildet, in dessen einem Ende ein Wellenbauteil 3 eingesetzt ist, an dem z.B. ein Hauptlager 4 ausgebildet ist, an dem die Nockenwelle zwischen einem Befestigungsflansch 5 für ein Antriebsrad und einem aufgesetzten Bundteil 6, das z.B. auch noch einen Steuernocken für die Zündung oder die Benzineinspritzung tragen kann, axial fixiert ist.

Die übrigen Lagerstellen 7, 8, 9 und 10 bilden vorzugsweise unmittelbar den Außenumfang 11 des Wellenteiles 2.

Die Befestigung des Befestigungsflansches 5 und des Bundteiles 6 kann in herkömmlicher Weise erfolgen, es ist jedoch ohne weiteres auch möglich, die Befestigung in der gleichen Weise wie für die Nockenteile nachfolgend beschrieben, in erfindungsgemäßer Weise vorzunehmen.

Am Wellenbauteil 2 sind z.B. paarweise angeordnete Nockenteile 12, 13, 14 und 15 angebracht, deren Befestigungen sich in kleinen Details unterscheiden, die nachfolgend mit Bezug auf die Ausführungsformen Variante 1, Variante 2, Variante 3 und Variante 4 erläutert werden.

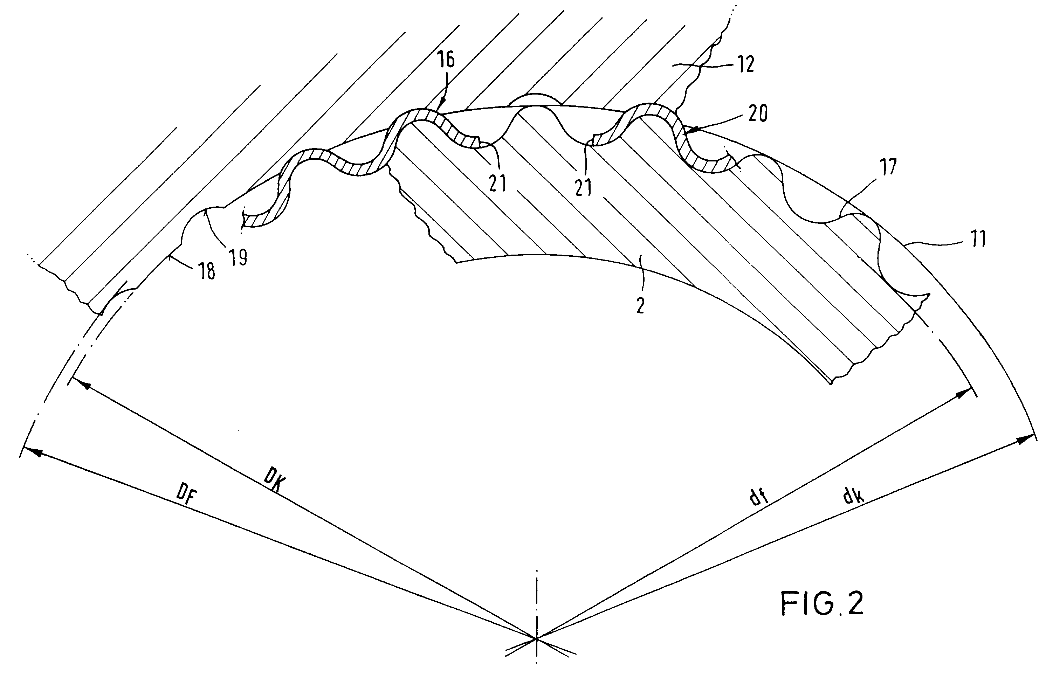

Zwischen dem Wellenteil 2 und den Nockenteilen 12, 13, 14 und 15 sind jeweils ein wellenförmiges Profil aufweisende, geschlitzte oder zweigeteilte Spannhülsen 16 angeordnet, die die drehfeste, formschlüssige Verbindung zwischen dem Wellenteil 2 und den Nockenteilen 12, 13, 14, und 15 herstellen und deren Ausbildung im Zusammenhang mit der Fig. 2 noch näher erläutert wird.

Wie aus Fig. 2 ersichtlich wird, ist am rohrförmigen Wellenteil 2 eine wellenförmige Außenverzahnung 17 ausgebildet, deren Fußkreis durch den Pfeil d_{f} und deren Kopfkreis durch den Pfeil dₖ angegeben ist, wobei der Kopfkreis kleiner bzw. gleich dem Durchmesser des Außenumfanges 11 des Wellenteiles 2 ist.

Die Nockenteile 12 sind an ihren Innenbohrungen 18 mit einer entsprechenden Innenverzahnung 19 versehen, die einem Teilbereich einer wellenförmigen Verzahnung entspricht, deren Kopfkreis durch den Pfeil D_{K} und deren Fußkreis durch den Pfeil D_{F} angegeben ist.

Zwischen dem Wellenteil 2 und den Nockenteilen 12 ist eine geschlitzte oder zweigeteilte Spannhülse 16 angeordnet, die ein wellenförmiges Profil 20 aufweist und deren freie Enden im Bereich des Schlitzes in Fig. 2 in der Mitte mit 21 bezeichnet sind.

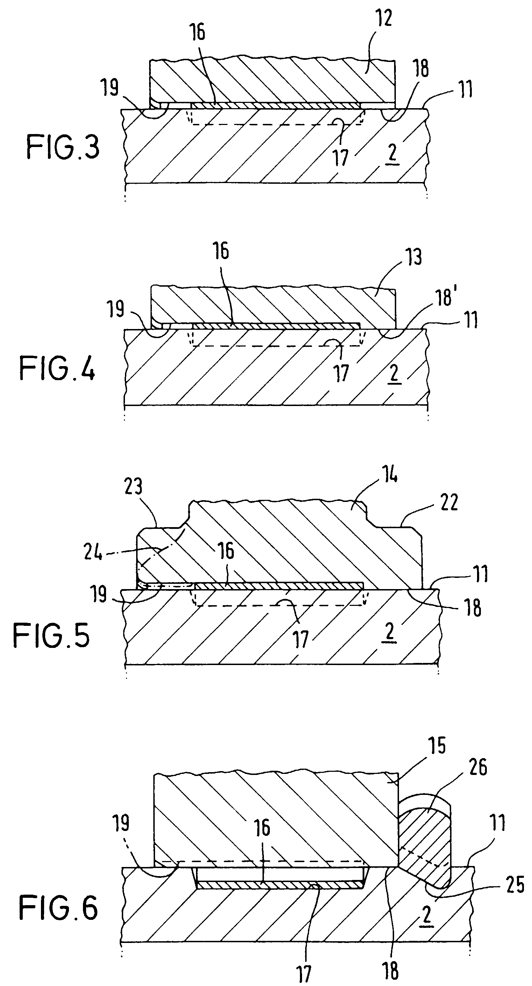

Wie aus Fig. 1 ersichtlich ist, sind für die in Fig. 2 gezeigte erfindungsgemäße Nockenteilbefestigung vier in Details abweichende Varianten möglich, die im Zusammenhang mit den Figuren 3 bis 6 noch näher erläutert werden.

Bei der in Variante 1 gezeigten Nockenteilbefestigung (siehe Fig. 3), ist die wellenförmige Außenverzahnung 17 am Wellenteil 2 z.B. durch Formwalzen innerhalb des Außenumfanges 11 des Wellenteiles 2 hergestellt. Die an der Innenbohrung 18 des Nockenteiles 12 ausgebildete teilweise Innenverzahnung 19 ist über die ganze Breite des Nockenteiles 12 durchgehend, z.B. durch Räumen, ausgebildet. Eine Zentrierung des Nockenteiles 12 auf dem Wellenteil 2 erfolgt über den Kopfkreis D_{K} des Nockenteiles 12 beidseitig auf dem Außenumfang 11.

Bei der in der Variante 2 gezeigten Ausführungsform (siehe Fig. 4), ist wieder die wellenförmige Außenverzahnung 17 innerhalb des Außenumfanges 11 des Wellenteiles 2 ausgebildet, die an den Nockenteilen 13 ausgebildeten teilweisen Verzahnungen 18 sind jedoch nicht über die gesamte Breite der Nokkenteile 13 hin durchgehend ausgebildet, sondern ein letzter Abschnitt der Innenbohrung 18' bildet eine geschlossene Zentrierung am Außenumfang 11 des Wellenteiles 2 und eine axial einseitig wirkende Lagesicherung. Die Herstellung solcher Nockenteile 13 ist in einfacher Weise durch Sintern möglich.

Bei der in Variante 3 gezeigten Ausführungsform (siehe Fig. 5), sind gegenüber den beiden Varianten 1 und 2 lediglich die Nockenteile 14 mit seitlichen Verbreiterungen 22 und 23 versehen, über die die Nockenteile 14 besser auf den Wellenteil 2 geführt werden können. Durch partielle, z.B. an drei am Umfang verteilten Stellen, vorgenommene Verformung 24 an einer der Verbreiterungen 22, siehe die Strich-Punkt-Linie, kann eine beidseitige axiale Lagesicherung für die Spannhülse 16 erreicht werden.

Die in Fig. 6 gezeigte Variante 4 ist ähnlich der Variante 2, nur daß hier eine Möglichkeit einer axialen Festlegungmittels eines in eine Ringnut 25 plastisch verformten Sicherungsringes 26 aufgezeigt wird.

Selbstverständlich sind noch andere an sich bekannte Möglichkeiten zur axialen Fixierung der Nockenteile möglich, falls sich herausstellen sollte, daß die federelastische Klemmbefestigung unter den in einem Ventiltrieb einer Brennkraftmaschine auftretenden Vibrationen keine ausreichende axiale Festlegung gewährleisten sollte.

## Patentansprüche

1. Zusammengesetzte Nockenwelle, insbesondere für Brennkraftmaschinen, mit einem Wellenteil (2) auf dem eine Vielzahl von Nockenteilen (12, 13, 14 und 15) unter Zwischenschaltung jeweils einer eine federelastische Klemmbefestigung gewährleistenden Spannhülse (16) fest angeordnet sind,
**dadurch kennzeichnet**, daß
- das Wellenteil (2) vorzugsweise als eine Hohlwelle vorzugsweise in Fertigteilqualität mit einer in den Nocken-Aufnahmebereichen ausgebildeten wellenförmigen Außenverzahnung (17),
- die Nockenteile (12, 13, 14 und 15) vorzugsweise als Fertigteilqualität aufweisende Sinterteile mit an ihren Innenbohrungen (18) teilweise ausgebildeten wellenförmigen Innenverzahnung (19) und
- die Spannhülsen (16) als mit den entsprechenden Außen- und Innenverzahnungen (17 und 19) zusammenwirkende, ein wellenförmiges Profil (20) aufweisende, geschlitzte oder zweigeteilte Spannhülsen (16) ausgebildet sind.

2. Zusammengesetzte Nockenwelle nach Anspruch 1,
**dadurch kennzeichnet**, daß
die am Wellenteil (2) ausgebildete wellenförmige Außenverzahnung (17), vom Außenumfang (11) des Wellenteiles (2) nach einwärts durch Formrollen und dergleichen hergestellt ist und der Außenumfang (11) die übrigen Lager) stellen (7, 8, 9 und 10) bildet.

3. Zusammengesetzte Nockenwelle nach den Ansprüchen 1 bis 2,
**dadurch kennzeichnet**, daß
- die an den Innenbohrungen (18) der Nockenteile (12) ausgebildete, teilweise Innenverzahnung (19) axial durchgehend , z.B. durch Räumen, ausgebildet ist.

4. Zusammengesetzte Nockenwelle nach den Ansprüchen 1 bis 3,
**dadurch kennzeichnet**, daß
- die an den Innenbohrungen (18) der Nockenteile (13) ausgebildeten teilweisen Innenverzahnungen (19) axial begrenzt, z.B. durch Sintern, ausgebildet ist und dadurch die Innenbohrung (18) die Axiallage der Nockenteile (7) in einer Richtung sichert.

5. Zusammengesetzte Nockenwelle nach den Ansprüchen 1 bis 4,
**dadurch kennzeichnet**, daß
- die Nockenteile (14) mit einer Basisverbreiterung (22 und 23) zur Verbesserung der Zentrierung versehen sind.

6. Zusammengesetzte Nockenwelle nach Anspruch 5,
**dadurch kennzeichnet**, daß
- die Nockenteile (14) an einer ihrer Basisverbreiterungen (22 oder 23) durch plastische Verformung (24) am Wellenteil (2) axial festgelegt sind.

## Claims

1. A composite camshaft, particularly for internal combustion engines, comprising a shaft member (2) on which a plurality of cam members (12, 13, 14 and 15) are securely fitted, in each case with interposition of a clamping sleeve (16) which ensures a resilient clamping fastening,
characterised in that
- the shaft member (2) is preferably in the form of a hollow shaft and preferably of finished part quality, and has a corrugated external tooth system (17) formed in the cam-receiving regions,
- the cam members (12, 13, 14 and 15)are preferably in the form of sintered parts of finished part quality and have a partially formed corrugated internal tooth system (19) on their internal bores (18), and
- the clamping sleeves (16) are in the form of slit or two-part clamping sleeves (16) having a corrugated profile (20) cooperating with the corresponding external and internal tooth systems (17 and 19).

2. A composite camshaft according to claim 1,
characterised in that
- the corrugated external tooth system (17) formed on the shaft member (2) is produced from the outer circumference (11) of the shaft member (2) inwards by roll forming or the like and the outer circumference (11) constitutes the conventional bearing positions (7, 8, 9 and 10).

3. A composite camshaft according to claim 1 or claim 2,
characterised in that
- the partial internal tooth system (17) formed on the internal bores (18) of the cam members (12) is formed axially continuously, e.g. by reaming.

4. A composite camshaft according to any of claims 1 to 3,
characterised in that
- the partial internal tooth system (19) on the internal bores (18) of the cam members (13) is formed, e.g. by sintering, in an axially limited manner, so that the internal bore (18) secures the axial position of the cam members (7) in one direction.

5. A composite camshaft according to any of claims 1 to 4,
characterised in that
- the cam members (14) are provided with widened portions (22 and 23) at the base to improve the centring.

6. A composite camshaft according to claim 5,
characterised in that
- the cam members (14) are axially fixed on the shaft member (2) at one of their widened base portions (22 and 23) by plastic deformation (24).

## Revendications

1. Arbre à cames composé, en particulier pour moteurs à combustion interne, comprenant une pièce formant un corps d'arbre (2), sur laquelle sont disposées fixes une pluralité de pièces formant des cames (12, 13, 14 et 15), chaque fois avec interposition d'une douille de serrage (16) garantissant une fixation élastique par serrage,
caractérisé en ce que
- la pièce formant le corps d'arbre (2) est réalisée de préférence comme un arbre creux, ayant de préférence la qualité d'une pièce finie pourvue d'une denture extérieure ondulée (17) formée dans les zones de réception des cames,
- les pièces formant les cames (12, 13, 14 et 15) sont réalisées comme des pièces frittées, présentant de préférence la qualité de pièces finies, qui sont pourvues, sur leurs alésages intérieurs (18), d'une denture intérieure ondulée (19) conformée partiellement, et
- les douilles de serrage (16) sont réalisées comme des douilles de serrage (16) fendues ou en deux parties, présentant un profil ondulé (20) et coopérant avec les dentures extérieures et intérieures (17 et 19) correspondantes.

2. Arbre à cames composé selon la revendication 1, caractérisé en ce que la denture extérieure ondulée (17) formée sur le corps d'arbre (2), est réalisée par roulage de forme ou une déformation analogue de la périphérie extérieure (11) du corps d'arbre (2) vers l'intérieur, et la périphérie extérieure (11) forme les autres paliers ou portées (7, 8, 9 et 10).

3. Arbre à cames composé selon les revendications 1 et 2, caractérisé en ce que la denture intérieure partielle (19), formée sur les alésages intérieurs (18) des cames (12), est réalisée axialement de façon continue, par brochage par exemple.

4. Arbre à cames composé selon les revendications 1 à 3, caractérisé en ce que les dentures intérieures partielles (19), formées sur les alésages intérieurs (18) des cames (13), sont réalisés axialement de façon limitée, par frittage par exemple, de sorte que l'alésage intérieur (18) fixe la position axiale des cames (13) dans une direction.

5. Arbre à cames composé selon les revendications 1 à 4, caractérisé en ce que les cames (14) sont pourvues d'un élargissement (22 et 23) de leur base afin de perfectionner le centrage.

6. Arbre à cames composé selon la revendication 5, caractérisé en ce que les cames (14) sont immobilisées axialement sur le corps d'arbre (2) par une déformation plastique (24) sur l'un des élargissements (22 ou 23) de leur base.
